Europäisches Patentamt

European Patent Office

Office européen des brevets

(19)

(11) **EP 0 642 000 B1**

(12) **EUROPEAN PATENT SPECIFICATION**

(45) Date of publication and mention
of the grant of the patent:
**27.02.2002 Bulletin 2002/09**

(51) Int Cl.⁷: **G01F 15/02**, G01F 25/00,
G01F 1/68, G01D 3/028

(21) Application number: **94202293.0**

(22) Date of filing: **10.08.1994**

(54) **Method for drift elimination in sensors**

Verfahren zur Beseitigung einer Sensordrift

Méthode d'élimination de dérivé pour des capteurs

(84) Designated Contracting States:
**DE FR GB NL**

(30) Priority: **12.08.1993 NL 9301399**
**22.02.1994 US 199538**

(43) Date of publication of application:
**08.03.1995 Bulletin 1995/10**

(73) Proprietors:
• **van Putten, Mauritius H.P.M.**
**NL-5632 BD Eindhoven (NL)**
• **Van Putten, Michael J.A.M.**
**NL-3011 ZP Rotterdam (NL)**
• **Van Putten, Antonius F.P.**
**NL-5632 BD Eindhoven (NL)**
• **Van Putten, Pascal F.A.M.**
**NL-5632 BD Eindhoven (NL)**

(72) Inventors:
• **van Putten, Mauritius H.P.M.**
**NL-5632 BD Eindhoven (NL)**
• **Van Putten, Michael J.A.M.**
**NL-3011 ZP Rotterdam (NL)**
• **Van Putten, Antonius F.P.**
**NL-5632 BD Eindhoven (NL)**
• **Van Putten, Pascal F.A.M.**
**NL-5632 BD Eindhoven (NL)**

(56) References cited:
**WO-A-91/05985**

• **PATENT ABSTRACTS OF JAPAN vol. 011, no.
153 (P-577), 19 May 1987 & JP-A-61 288110
(YOKOGAWA ELECTRIC CORP), 18 December
1986,**

**Description**

The invention provides a method for the elimination of drift in vector sensors. To set notation, a vector sensor is understood to be measuring a physical vectorial quantity $S$ in an input energy domain $D_i$ by converting $S$ into a signal in an output energy domain $D_o$. In particular, we think here of electric or electronic sensors for the measurement of gas flow or pressure. Thus, sensors are seen to simultaneously possess a state $A$ in the input energy domain $D_i$ and a state $B$ in the output energy domain $D_o$.

The new method of operation concerns the real-world application of sensors in the presence of imperfections. Imperfections are generally present in both the sensor itself and, in the case of active sensors, in the biasing of the sensor and its output amplifiers. While ideal sensors as abstract devices possess zero sensitivity for physical quantities other than $S$, sensors in the real-world possess imperfections due to technological limitations and, consequently, possess finite sensitivity for quantities other than $S$. Errors in the measurement of $S$ due to finite sensitivity to quantities other than $S$ are manifested in the form of offset with unpredictable behavior. The resulting drift in offset persists *additively* as drift in the output signal, when the input signal, $S$, is kept constant. Typically, the resulting offset is predominant over noise, *i.e., S*/offset << *S*/noise, so that offset defines the lowest limit at which $S$ can be reliably measured. In other words, offset typically determines the dynamic range of the sensor at hand, rather than noise. We remark that drift in the *sensitivity* of a sensor to its measurand $S$ does not influence the dynamic range of the sensor. For this reason, only the forementioned drift in offset, *i.e.*, *additive drift* is considered here.

The current approach towards elimination of drift is taken by a continuous effort towards ever more precise manufacturing processes. In particular, modern manufacturing processes involve special correction techniques such as laser trimming, with which imperfections resulting from the basic production process are greatly reduced. In such approach, the final performance of the sensor is determined by the quality of the overall production process. With our new method, proposed below, technological limitations are of secondary importance.

SUMMARY OF THE INVENTION

The new method is proposed for elimination of drift. The method applies to sensors with directional sensitivity, *i.e.,* anisotropic sensitivity in two or more directions. Sensors of this type are also known as vector sensors. Sensors with this property define an orientation with respect to which S is measured.

An example of a vector sensor is given by the flow sensor by A.F.P. van Putten (U.S. patent 4,548,077 and 3,996,799), where the gas flow velocity, $S$, induces a thermal gradient (a vectorial quantity) in a silicon integrated chip. This silicon flow sensor is heated electrically, and obtains temperature gradients in the presence of gas flow. An integrated Wheatstone bridge reads off the temperature gradient induced by such flow.

The new method eliminates drift by taking the difference of two measurements which are made by the same sensor *in succession with different sensor states A* in the input energy domain $D_i$. In the presence of directional sensitivity the two different sensor states $A$ can be realized through *two different relative orientations between sensor and medium.* Thus, in the new method the forementioned two successive measurements, from which the drift-free measurement is obtained, are obtained with successively different relative orientations of the sensor with respect to the medium, which relative orientations are precisely those that possess different sensitivities to the physical quantity $S$. In the new method, which we shall refer to as the *Alternating Direction Method* (ADM), the drift-free measurements are obtained from the difference between successive measurement results by the sensor when measuring with alternating relative orientations between sensor and medium. We shall refer to the output signal thus obtained as the *ADM signal.* We conclude that a sensor which discriminates between $S$ and quantities other than $S$ which may interfere with the measurement of $S$, in the sense that the sensor possesses forementioned directional sensitivity to $S$, while its sensitivity is independent of direction to quantities other than $S$ which may interfere with measurement of $S$, offers an ADM signal which contains no drift.

ADM APPLIED TO GAS VOLUME MEASUREMENT

The power of ADM can be exemplified in gas volume measurement using the flow sensor as described in forementioned U.S. patents. As an abstract device this sensor is bidirectional in the sense that the sign of the electric output signal due to the flow velocity S changes with rotation of the sensor over 90° or 180° (as described in forementioned U.S. patents 4,548,077 and 3,996,799, and in U.S. patent application 127424 by M.H.P.M. van Putten) relative to the flow direction. In the manufacturing process of these sensors asymmetries occur on the order of a few percent. A realistic measurement, therefore, represents not only the temperature gradient over the sensor, that is, the bidirectional signal, but contains a component as a function of the total dissipation as well. Drift in the offset as a function of temperature, humidity, age etc., deteriorates the measurement signal in practice mainly through a change in the total dissipation, and, consequently, is independent of relative orientation between sensor and flow medium (a common mode signal in the flow medium). The said bidirectional flow sensor, therefore, offers the unique possibility for elimination of drift in offset through application of ADM. This may be made more precise in gas volume measurement as follows.

In gas volume measurement with ADM we integrate the electric output signal of the sensor, *V*, as induced by the flow velocity *S*, over consecutive time intervals $0 < t_1 < t_2 < \cdot < t_k < t_{k+1} < \cdots$ with $t_{k+1} - t_k \equiv \triangle t$. Introducing the quantity $q_k$ as the measured volume over the time-interval $t_k - t_{k-1}$ with flow over the sensor alternating with 180° (90°) relative orientation, then we have

$$q_k := \int_{t_{k-1}}^{t_k} V \mathrm{d}t = (-1)^k \int_{t_{k-1}}^{t_k} V_{flow}\mathrm{d}t + \int_{t_{k-1}}^{t_k} V_{drift}\mathrm{d}t. \qquad (1)$$

Here, we have written the output signal as it is composed of the pure $V_{flow}$ and the undesired drift, $V_{drift}$. The *ADM volume, $Q_n^{ADM}$*, is now given by

$$Q_n^{ADM} := \Sigma_k(-1)^k[q_k - q_{k-1}] = \int_0^{t_n} V_{flow}\mathrm{d}t + \epsilon_{n,\Delta t} \qquad (2)$$

with *ADM remainder*

$$\epsilon_{n,\Delta t} := \Sigma_k(-1)^k \int_{t_{k-1}}^{t_k} V_{drift}\mathrm{d}t. \qquad (3)$$

The ADM remainder has the property that

$$\epsilon_{n,\Delta t} \sim \int_{t_{n-1}}^{t_n} V_{drift}\mathrm{d}t - \int_0^{t_1} V_{drift}\mathrm{d}t \qquad (4)$$

in the limit as $\triangle t \to 0$ with $t_n$=const. ADM eliminates, therefore, undesired contributions due to drift in offset in gas volume measurement up to a remainder in the order of $2\Delta t V_{drift}$. Note that the ADM remainder is *independent* of total time of integration, and only depends on the interval time, $\Delta t$, of each measurement with either of the alternating directions.

SURVEY OF DRAWINGS

Application of ADM in gas flow measurement is illustrated by the following two implementations.

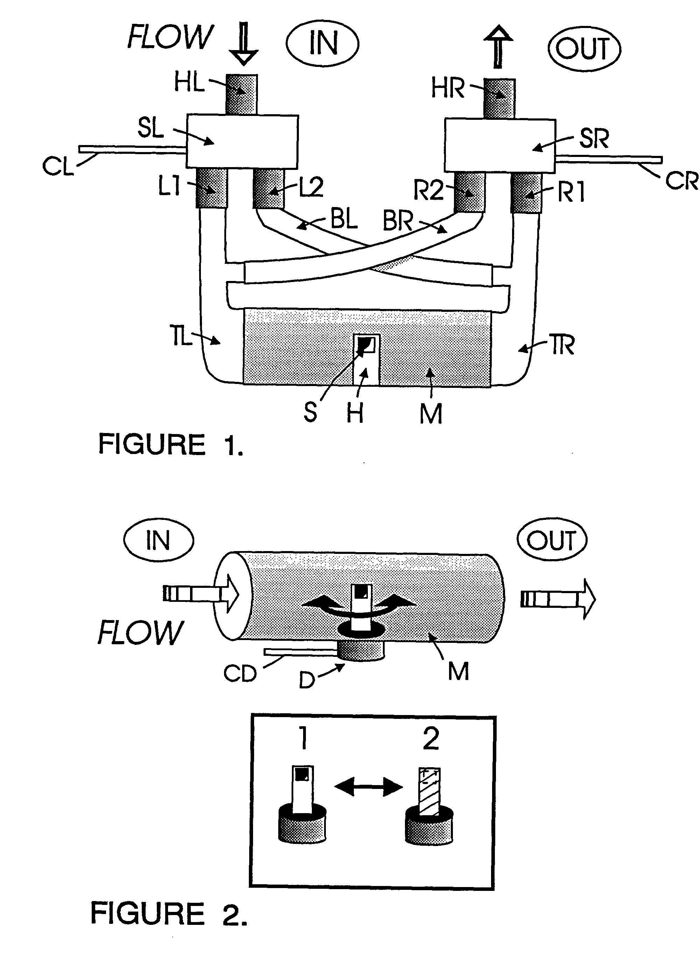

*First possible implementation*. Figure 1 shows an implementation of a gas volume meter, in which the two different relative orientations between sensor *S* and medium are obtained through successively changing the flow direction of the medium as it passes through a measurement section M with fixed sensor holder H. To this end, a gas flow switching unit is used which alternates the direction of the gas flow using two flow switches, SL and SR. The flow switches SL and SR are operated via the control inputs CL and CR, respectively. Counter clockwise (clockwise) flow is obtained by opening L1 (L2) and R1 (R2) for gas flow entering HL and exiting HR, respectively, with L2 (L1) and R2 (R1) in closed position. Gas flow counter clockwise is obtained via the T-elements TL and TR, which connect the measurement section M with the switches SL and SR, respectively. Gas flow clockwise is obtained through the two connections BL and BR, connections between the T-elements TL and TR, which are connected to the measurement section M, and switches SR and SL, respectively.

Operation of this flow switching set-up alternatingly clockwise and counter clockwise results in two relative orientations between sensor and flow medium which differ by 180°.

ADM can now be applied to the sensor as described in forementioned U.S. patents with 180° bidirectional sensitivity, by taking the difference between every two successive measurements with different relative orientations between sensor and medium obtained through alternatingly clockwise and counter clockwise flow directions.

*Second possible implementation*. Figure 2 shows an implementation of a gas flow meter, in which the two different relative orientations between sensor and flow medium are obtained by alternatingly setting the sensor in two different positions in a measurement section M with fixed flow direction (from the left to the right in Figure 2). To this end, a rotational unit, D, is used, in which the sensor holder H, as in Figure 1, now changes position alternatingly by 180° from Position 1 (2) to Position 2 (1). The rotational unit D is operated via control input CD. With forementioned installation of the sensor ADM can now be applied, by taking the difference between measurements with positions alternatingly in 1 and 2, such as indicated in the 'boxed' subfigure.

Tests have shown that with ADM the forementioned flow sensor yields a dynamic range up to three decades of flow velocity, from $1cms^{-1}$ to $10ms^{-1}$ in the presence of reproducibility better than 1%. With this new method of operation, measurements are made possible which go beyond those feasible with current techniques (other than laser-doppler flow metering techniques).

DESCRIPTION OF PREFERRED EMBODIMENTS

Referring more specifically to the drawings, for illustrative purposes the present invention is embodied in each of the two apparatus generally shown in Figure 1 and Figure 2. It will be appreciated that the embodiment of the invention may vary as to the particular sensor and as to the details of the parts without departing from the basic concepts as disclosed herein.

Referring to Figure 1, the flow switch SL(SR) is a standard pneumatic switch, such as those used for pneumatic control in industry. The switch SL(SR) possesses three opening pipes for gas flow: with two positions SL(SR) connects either the pipe opening HL(HR) with pipe opening L1(R1) or HL(HR) with pipe opening L2(R2). The switch is operated via control input CL(CR), either pneumatically or electrically, depending on the switch used. The pipe openings L1 and R1 are each connected to a T-pipe elements TL and TR, respectively. The pipe openings L2 and R2 are each connected to pipes BL and BR, respectively, which are in turn connected to forementioned T-elements TR and TL, respectively.

The three pipe openings in each of the switches SL and SR, the pipes BL and BR, and the T-elements TL and TR all have inner diameters preferably, though not necessarily, sufficiently large to ensure flow through-put with a low amount of friction (at the expected flow rate), and therefore a low amount of pressure drop across the apparatus as measured over the input HL at the input pipe of switch SL and the output HR at the output pipe of switch SR. The pipes BL, BR and T-elements TL, TL are made of durable material, either flexible or rigid, such as plastic or metal. The measuring section M is made of a pipe with inner diameter sufficiently large to allow uninhibited flow over the holder H with sensor S. The sensor S may be the silicon flow sensor as described in U.S. patent 4,548,077, or any other sensor with allows for 180° directional sensitivity. The sensor is mounted on a holder H, which is made out of thermally insulating material with electrical connections on it for interconnection between the sensor itself and the outside world.

Referring to Figure 2, the measuring section is made of a pipe with inner diameter sufficiently large to allow uninhibited flow through-put (at the expected flow rate), with preferably low amount of pressure drop across the input at the left and the output at the right. The measuring section M contains the switching unit D in order to alternatingly rotate the holder H with sensor S, as described in Figure 1, in two positions 1 and 2. The switching unit is operated via control input CD, which drives the holder H in either of the two positions 1 and 2. Preferably, the switching unit D is an electromechanical device, containing an electrical motor to drive the holder H, with electrical control CD. Alternatively, the switching unit D could be constructed as a purely mechanical device with mechanical or pneumatic control CD. As indicated in Figure 2, the switching unit enables the holder H to rotate over 180°, while providing electrical connection between the rotating holder H and the outside world. As in the embodiment shown in Figure 1, the holder H contains the electrical connections to the sensor S. The electrical connections between the rotating holder H and the outside world is made possible by using flexible cable. In applications where frequent switching between the alternating directions must be applied, for reasons similar to those as given quantitatively at the end of the previous discussion on ADM applied to gas volume measurement, alternative means for electrical connection between the rotating holder H and the outside world could be used. In particular, the techniques used for electrical connection between rotating cylindrical heads in magnetic video recorder apparatus could be used as an alternative to using a flexible cable, in order to provide for the electrical connection between the holder H and the outside world.

In each of the embodiments as shown in Figure 1 and 2, it is preferable to have the measuring section M act as a shield for external influences. In the embodiment in Figure 2, it is of particular importance to have section M act as a shield, because upon alternating between positions 1 and 2, as prescribed by ADM, external influences for which the sensor S is sensitive, can contribute to the ADM signal in case the external influences act with different intensities on the sensor in each of the two positions 1 and 2. Thus, in the embodiment of Figure 2, the section M is made preferably of non-transparent material so as to avoid influences of external light should the sensor S be light sensitive, something which is typical for semi-conductor sensors.

Although the description above is in the context of flow measurement, this presentation should not be construed as limiting the applicability of ADM but merely as providing illustration of a real-world application of ADM. Thus, the scope of ADM should be determined by the appended claims and their legal equivalents.

**Claims**

1. Method of measurement of a physical quantity *S* in a given medium by employment of a sensor whose sensitivity to *S* possesses directional dependence the method having the property that drift in the measurement is eliminated by means of alternating the orientation of the sensor and the medium with respect to each other, said alternating orientations being associated with alternatingly different sensitivities of said sensor to S, and taking the difference between the alternating sensor measurements of S, said alternating sensor measurements being associated with said alternatingly different orientations.

2. Method of operation such as stated in Claim 1 with the property that the two relative orientations between sensor and medium are obtained by alternating the orientation of said medium with physical quantity *S*, while keeping the orientation of said sensor fixed.

3. Method of operation such as stated in Claim 1 with the property that the two relative orientations between sensor and medium are obtained by alternating the position of the sensor in the medium with physical quantity *S*, while keeping the orientation of said medium fixed.

4. Method of measurement of a physical quantity S in space by employment of a sensor whose sensitivity to S possesses directional dependence, the method having the property that drift in the measurement is eliminated by means of alternating the orientation of the sensor with respect to the distant stars, said alternating orientations being associated with alternatingly different sensitivities of said sensor to S, and taking the difference between the alternating sensor measurements of S, said alternating sensor measurements being associated with said alternatingly different orientations.

**Patentansprüche**

1. Operationsmethode für Beseitigung des Abtrift in den Sensoren mit der Eigenschaft dass jede einzelne Messung einer physikalischen Quantität S in einem gegebenen Medium als der Unterschied der Resultate von zwei teilweiser Messen definiert wird, besagte zwei partielle Messungen, die nacheinander durch besagten Sensor mit unterschiedlichen relativen Orientierungen zwischen Sensor und Medium gemacht werden, besagte relative Orientierungen, die eindeutigen Empfindlichkeiten des besagten Sensors S entsprechen.

2. Operationsmethode nach Anspruch 1, worin die zwei relativen Orientierungen zwischen Sensor und Medium erreicht werden, indem man die Orientierungen des besagten Mediums ändert (mit physikalischer Quantität S), und indem man die Orientierung des besagten Sensors nicht ändert.

3. Operationsmethode nach Anspruch 1, worin die zwei relativen Orientierungen zwischen Sensor und Medium erreicht werden, indem man die Orientierungen des besagten Sensor ändert (mit physikalischer Quantität S), und indem man die Orientierung des besagten Medium nicht ändert.

**Revendications**

1. Méthode de fonctionnement pour l'élimination de la dérive dans des capteurs avec la propriété que chaque mesure simple d'une quantité physique S dans un milieu indiqué est définie comme la différence entre les résultats de deux mesures partielles, ces deux mesures partielles étant faites successivement par ce capteur avec différentes orientations relatives entre le capteur et le milieu, ces orientations relatives correspondant aux différentes sensibilités du capteur à S.

2. Méthode de fonctionnement selon la revendication 1, dans lequel ledit deux orientations relatives entre le capteur et le milieu sont obtenues en alternant l'orientation de ce milieu (avec quantité physique S), a lors que l'orientation de ce capteur reste fixé.

3. Méthode de fonctionnement selon la revendication 1, dans lequel ledit deux orientations relatives entre le capteur et le milieu sont obtenues en alternant l'orientation du capteur dans le milieu (avec quantité physique S), maintenant l'orientation de ce milieu reste fixé.

FIGURE 1.

FIGURE 2.